**Europäisches Patentamt**

**European Patent Office**

**Office européen des brevets**

(19)

(11) Numéro de publication: **0 223 672**
**B1**

# (12) FASCICULE DE BREVET EUROPEEN

(45) Date de publication du fascicule du brevet:
**15.03.89**

(51) Int. Cl.⁴: **B60R 22/20**

(21) Numéro de dépôt: **86402338.7**

(22) Date de dépôt: **17.10.86**

(54) Dispositif de réglage de la position d'un renvoi de sangle, notamment de ceinture de sécurité pour véhicule automobile.

(30) Priorité: **24.10.85 FR 8515830**
**07.02.86 FR 8601716**

(43) Date de publication de la demande:
**27.05.87 Bulletin 87/22**

(45) Mention de la délivrance du brevet:
**15.03.89 Bulletin 89/11**

(84) Etats contractants désignés:
**DE ES GB IT SE**

(56) Documents cités:
**EP-A- 0 092 105**
**EP-A- 0 136 166**
**FR-A- 2 107 446**
**GB-A- 2 091 537**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Escaravage, Gérard, 5 Impasse des Graverots, F-25700 Valentigney(FR)**

(74) Mandataire: **Moncheny, Michel et al, c/o Cabinet Lavoix 2 Place d'Estienne d'Orves, F-75441 Paris Cedex 09(FR)**

ACTORUM AG

## Description

La présente invention concerne un dispositif de réglage de la position d'un renvoi de sangle notamment de ceinture de sécurité pour véhicule automobile.

Sur la plupart des véhicules, ce renvoi de sangle est disposé sur un doigt d'ancrage fixé sur la carrosserie du véhicule, à une hauteur convenant à une majorité d'utilisateurs dits de taille normale.

Toutefois, cette hauteur ne convient pas à certains utilisateurs, en particulier aux personnes de petite taille.

Pour résoudre ce problème, on connaît dans l'état de la technique un certain nombre de dispositifs mécaniques de réglage de la hauteur de ce renvoi de sangle.

Le EPA-A 0 092 105 décrit un dispositif de réglage de la position d'un renvoi de sangle de ceinture, ce dispositif étant muni d'un moteur électrique qui fait tourner un arbre fileté. Le renvoi de sangle est monté sur une pièce tarandée qui coopère avec l'arbre fileté.

Cependant, ces dispositifs présentent un certain nombre d'inconvénients, notamment au niveau des possibilités de réglage, de leur structure relativement complexe et donc de leurs coûts de fabrication et de montage relativement élevés.

Le but de l'invention est de résoudre les problèmes évoqués ci-dessus en proposant un dispositif de réglage rapide et précis, de la position du renvoi de sangle, pour adapter celle-ci à la morphologie de l'utilisateur.

A cet effet, l'invention a pour objet un dispositif de réglage de la position d'un renvoi de sangle notamment de ceinture de sécurité pour véhicule automobile, dans lequel ledit renvoi de sangle est monté déplaçable entre deux positions extrêmes par l'intermédiaire de moyens d'entraînement comportant un moteur électrique alimenté par l'intermédiaire d'un organe de commande de la position dudit renvoi, en tout point de la course de celui-ci, définie par les deux positions extrêmes, ledit renvoi de sangle étant disposé sur un doigt d'ancrage, caractérisé en ce que le doigt d'ancrage est solidaire du moteur électrique, ce moteur électrique étant monté déplaçable axialement entre les deux positions extrêmes, et en ce que le doigt est solidaire du stator du moteur électrique, ce stator comportant des parties en saillie coopérant avec des moyens de guidage en déplacement et de retenue du moteur, solidaires de la carrosserie du véhicule, en ce que les moyens de guidage en déplacement et de retenue du moteur sont constitués par une plaque métallique comportant des bords repliés coopérant avec les parties en saillie du moteur, et en ce que le rotor du moteur électrique est creux et taraudé, et coopère avec une tige filetée fixée sur le véhicule pour assurer le déplacement axial du stator du moteur électrique et donc du renvoi de sangle.

L'invention sera mieux comprise à l'aide de la description qui va suivre, donnée uniquement à titre d'exemple et faite en se référant aux dessins annexés, sur lesquels:

– la Fig. 1 représente un habitacle d'un véhicule équipé d'un dispositif de réglage selon l'invention;

– la Fig. 2 représente un mode de réalisation d'un dispositif de réglage selon l'invention;

– la Fig. 3 représente un schéma électrique illustrant le fonctionnement du dispositif de réglage représenté sur la figure 2;

– la Fig. 4 représente une vue de dessous d'une variante de réalisation d'un organe de commande entrant dans la constitution d'un dispositif selon l'invention; et,

– la Fig. 5 représente une vue en coupe suivant la ligne V–V de la Fig. 4.

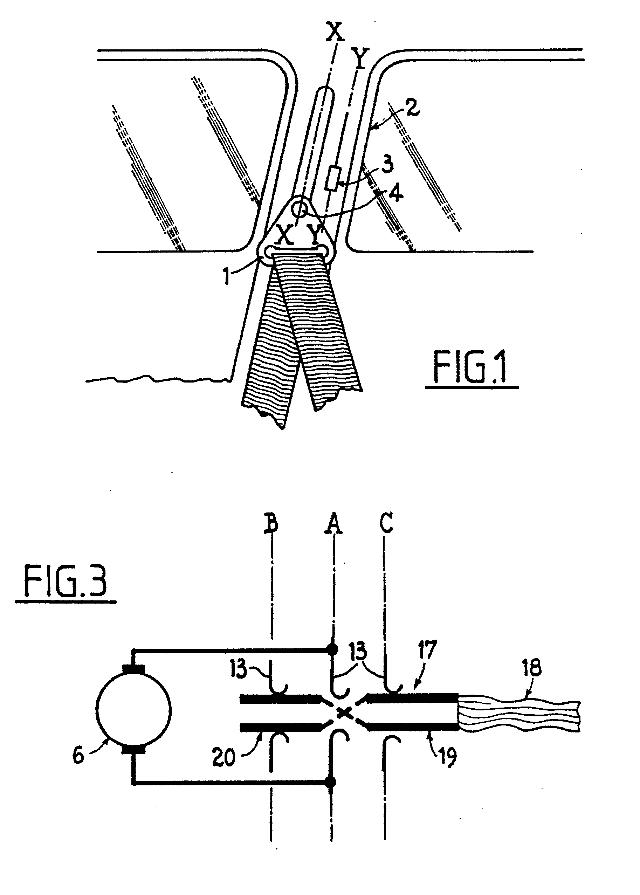

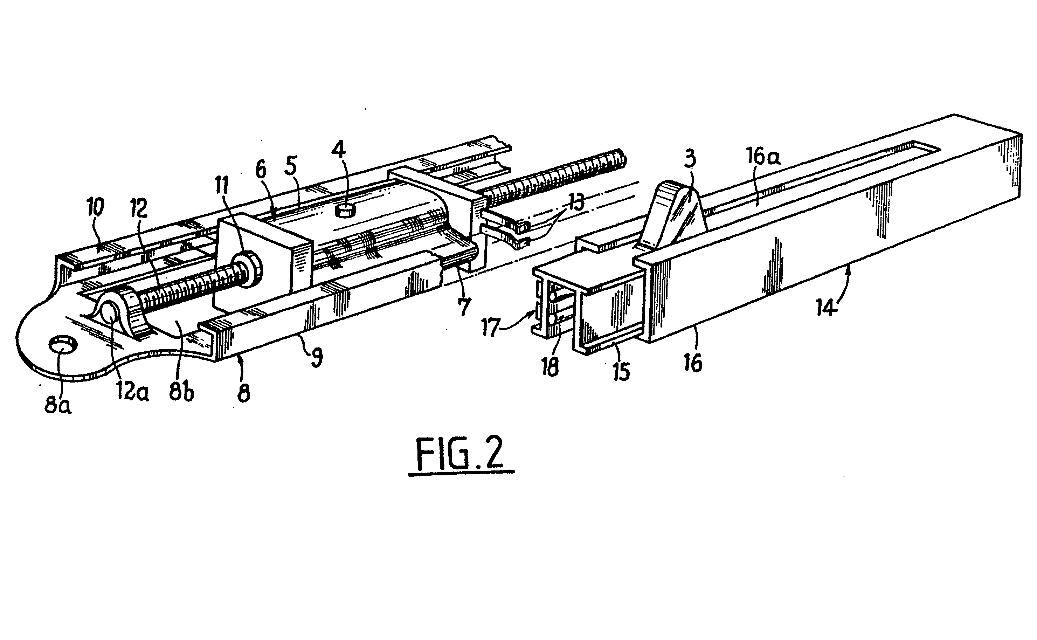

Ainsi qu'on peut le voir sur la Fig. 1, un renvoi de sangle 1 est monté déplaçable suivant un axe X–X entre deux positions extrêmes, le long du montant vertical 2 d'un véhicule automobile. Ce déplacement est commandé comme on le verra par la suite par un curseur 3 également monté déplaçable entre deux positions extrêmes suivant un axe Y–Y parallèle à l'axe X–X.

Le renvoi de sangle 1 est disposé sur un doigt d'ancrage 4 qui comme on peut le voir sur la Fig. 2 est solidaire d'un stator 5 d'un moteur électrique 6. Ce stator 5 comporte des parties en saillie latérales 7 coopérant avec des moyens 8 de guidage en déplacement et de retenue du moteur, ces moyens étant fixés sur la carrosserie du véhicule, par exemple en 8a.

Comme on peut le voir sur cette figure, les moyens de guidage en déplacement et de retenue du moteur sont constitués par une plaque métallique comportant des bords 9 et 10 repliés et coopérant avec les parties en saillie du stator. Cette plaque comporte également une lumière 8b dans laquelle peut coulisser le moteur électrique.

Le rotor 11 du moteur électrique est creux et taraudé et coopère avec une tige filetée 12, traversant le rotor et fixée sur le véhicule, pour assurer le déplacement axial du moteur entre lesdites deux positions extrêmes. Avantageusement, au moins l'une 12a, des extrémités de cette tige filetée 12 est fixée sur la plaque métallique constituant les moyens de guidage et de retenue du moteur électrique.

Les bornes d'alimentation du moteur électrique sont constituées par des frotteurs 13 solidaires du stator 5 de celui-ci et coopérant avec un organe 14 de commande de la position du renvoi de sangle.

Cet organe de commande 14 comporte un tiroir 15 monté déplaçable à coulissement dans une glissière 16 par l'intermédiaire du curseur 3 mentionné précédemment, ce curseur faisant saillie hors de la glissière par une fente 16a ménagée à cet effet dans celle-ci, de sorte que l'utilisateur a accès à ce curseur pour déplacer manuellement le tiroir. Le tiroir 15 présente sur sa surface en regard des frotteurs 13, des pistes conductrices 17 destinées à coopérer avec les frotteurs 13 pour alimenter le moteur électrique. Ces pistes conductrices 17 sont reliées à la source d'alimentation du véhicule par des fils conducteurs 18.

Comme on peut le voir sur la Fig. 3, le tiroir comporte deux jeux de pistes conductrices 19 et 20 connectés à la source d'alimentation du véhicule de manière à présenter des polarités inverses. D'autre part, les deux jeux de pistes sont séparés par un espace libre dans lequel les curseurs 13 ne sont plus en contact avec les pistes conductrices, de sorte que l'alimentation du moteur électrique est coupée.

Le fonctionnement d'un tel dispositif est le suivant.

La position de repos du dispositif est celle référencée par A sur la Fig. 3, c'est à dire celle dans laquelle les curseurs 13 sont en regard de l'espace libre séparant les deux jeux de pistes conductrices. Dans ce cas, le moteur n'est pas alimenté et le doigt d'ancrage 4 et donc le renvoi de sangle 1, sont dans une position déterminée.

Si l'on désire déplacer ce doigt d'ancrage soit vers le haut, soit vers le bas, on agit manuellement sur le curseur 3 pour déplacer le tiroir 15 dans la glissière 16 et donc les pistes conductrices 17 par rapport aux frotteurs 13. On arrive alors par exemple dans la position référencée par B sur la Fig. 3, dans laquelle les frotteurs 13 sont en contact avec le jeu 20 de pistes conductrices, de sorte que le rotor 11 du moteur 6 tourne dans un certain sens et entraîne le déplacement du moteur dans les moyens de guidage et de retenue.

Le stator du moteur se déplaçant, le doigt d'ancrage 4 du renvoi de sangle et les frotteurs 13 se déplacent également jusqu'à ce que ces frotteurs arrivent à nouveau en regard de l'espace libre séparant les deux jeux de pistes conductrices.

L'alimentation du moteur est alors coupée et celui-ci s'immobilise en déterminant une nouvelle position du doigt d'ancrage du renvoi de sangle en fonction du déplacement du curseur.

Dans le cas où l'on déplace le tiroir en sens inverse de celui mentionné précédemment, les frotteurs 13 viennent en contact avec le jeu 19 de pistes conductrices comme représenté en C sur la Fig. 3.

La polarité de ce jeu de pistes étant inverse à celle du jeu 20 de pistes, le moteur électrique est donc alimenté en sens inverse et le rotor de ce moteur tourne également en sens inverse de celui du cas précédent. Le moteur se déplace alors dans l'autre direction tant que les frotteurs 13 ne sont pas revenus en regard de l'espace libre séparant les deux jeux de pistes. Il va de soi que le renvoi de sangle étant disposé sur un doigt d'ancrage solidaire de ce moteur, il suit également ce mouvement.

On voit donc que le tiroir et les éléments associés à celui-ci constituent des moyens de commande de la position dudit renvoi de sangle en tout point de la course de ce renvoi, cette course étant définie par les deux positions extrêmes entre lesquelles peut se déplacer le renvoi de sangle. Le curseur 3 permet de déplacer le tiroir 15 de manière à déplacer l'espace libre séparant les deux jeux de pistes et à amener un jeu de pistes en contact avec les frotteurs 13 pour alimenter le moteur afin qu'il se déplace dans le sens désiré pour monter ou descendre le doigt d'ancrage du renvoi de sangle.

Il va de soi que cet organe de commande de la position dudit renvoi peut être constitué par un inverseur à trois positions de type connu permettant d'alimenter le moteur jusqu'à ce qu'il ait atteint la position désirée et de couper cette alimentation lorsque cette position est atteinte. Dans ce cas, l'inverseur est relié à un jeu unique de pistes conductrices disposées sur un tiroir fixe, ces pistes conductrices coopérant avec des frotteurs solidaires du stator du moteur électrique pour assurer l'alimentation de celui-ci. Ces pistes sont alors reliées à la source d'alimentation du véhicule à travers l'inverseur qui permet d'inverser la polarité de ces pistes pour déterminer le sens de déplacement du moteur et donc du renvoi de sangle et de couper l'alimentation du moteur, en position de réglage désiré.

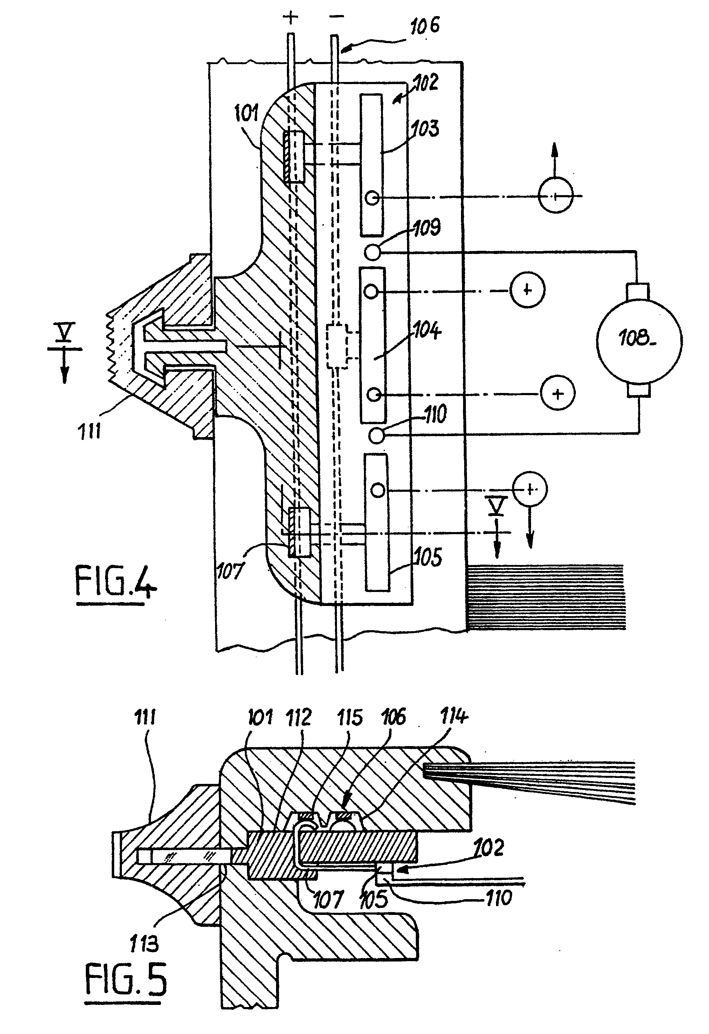

Comme on peut le voir sur la Fig. 4, qui représente une variante de réalisation de l'organe de commande de la position du renvoi de sangle, celui-ci comprend un tiroir 101 sur lequel est disposé un premier jeu 102 de trois pistes conductrices, respectivement 103, 104 et 105, à peu près alignées, séparées l'une de l'autre par un espace libre de coupure de l'alimentation du moteur électrique et connectées à la source d'alimentation du véhicule de manière à présenter des polarités alternées successivement. Ces pistes conductrices sont reliées à un second jeu 106 de pistes conductrices reliées aux bornes positive et négative de la source d'alimentation du véhicule, par l'intermédiaire de frotteurs par exemple 107 pour la piste conductrice 105. Ainsi, dans l'exemple décrit, les pistes conductrices 103 et 105 présentent une polarité positive, tandis que la piste 104 présente une polarité négative.

Le moteur électrique 108 de déplacement du renvoi de sangle comporte deux frotteurs 109 et 110 qui, comme il est représenté sur cette figure, sont en regard des espaces libres séparant les pistes conductrices les unes des autres. Ces frotteurs 109 et 110 sont destinés à coopérer avec les pistes conductrices 103, 104 pour alimenter le moteur pour qu'il se déplace dans une certaine direction ou avec les pistes conductrices 104, 105 afin que celui-ci se déplace dans l'autre direction. Cette commande du moteur est fonction du déplacement du tiroir 101 par rapport aux frotteurs 109 et 110 d'alimentation du moteur. En effet, un curseur 111, solidaire du tiroir, est monté déplaçable manuellement le long de la course de réglage du renvoi de sangle, pour régler la position du tiroir 101 et donc des espaces libres de coupure de l'alimentation du moteur et déterminer ainsi sa position et donc celle du renvoi de sangle.

En fonction du déplacement du curseur et donc du tiroir, le moteur électrique est alimenté soit dans un sens soit dans l'autre, jusqu'à ce qu'il arrive dans la position de réglage désiré dans laquelle les curseurs 109 et 110 sont en regard des espaces libres de coupure de l'alimentation du moteur.

Comme on peut le voir plus clairement sur la Fig. 5, le curseur 111 entraîne un déplacement du tiroir 101, qui se présente par exemple sous la forme d'une plaquette isolante, dans une glissière 112 d'une structure de support quelconque solidaire du véhicule. Cette structure de support comporte une fente 113 à travers laquelle fait saillie une partie du tiroir 101, sur laquelle est fixé le curseur 111. Les pistes conductrices du jeu 106 sont par exemple disposées dans des logements 114 et 115 ménagés à cet effet dans la structure de support.

Par ailleurs, pour des raisons de compréhension du fonctionnement du dispositif, on a représenté le frotteur 110 du moteur en appui sur la piste conductrice 105.

Ainsi qu'il a été décrit précédemment le renvoi de sangle est solidaire du stator du moteur électrique et celui-ci est monté déplaçable axialement entre les deux positions extrêmes, de sorte que le réglage de la position du curseur et donc des espaces libres de coupure de l'alimentation du moteur, permet d'obtenir un réglage de la position du renvoi de sangle.

Il est à noter que dans l'exemple de réalisation décrit, les frotteurs reliant le premier jeu 102 de pistes conductrices, au second jeu 106 de pistes conductrices, par exemple le frotteur 107 pour la piste 105, traversent la plaquette isolante constituant le tiroir.

## Revendications

1. Dispositif de réglage de la position d'un renvoi de sangle (1) notamment de ceinture de sécurité pour véhicule automobile, dans lequel ledit renvoi de sangle est monté déplaçable entre deux positions extrêmes par l'intermédiaire de moyens d'entraînement comportant un moteur électrique (6; 108) alimenté par l'intermédiaire d'un organe (14) de commande de la position dudit renvoi, en tout point de la course de celui-ci, définie par les deux positions extrêmes, ledit renvoi de sangle (1) étant disposé sur un doigt d'ancrage (4), caractérisé en ce que le doigt d'ancrage est solidaire du moteur électrique, ce moteur électrique étant monté déplaçable axialement entre les deux positions extrêmes, le doigt (4) étant solidaire du stator (5) du moteur électrique (6), ce stator comportant des parties en saillie (7) coopérant avec des moyens (8) de guidage en déplacement et de retenue du moteur, solidaires de la carrosserie du véhicule, en ce que les moyens de guidage en déplacement et de retenue du moteur sont constitués par une plaque métallique comportant des bords repliés (9, 10) coopérant avec les parties en saillie (7) du moteur, et en ce que le rotor (11) du moteur électrique est creux et taraudé, et coopère avec une tige filetée (12) fixée sur le véhicule pour assurer le déplacement axial du stator (5) du moteur électrique et donc du renvoi de sangle (1).

2. Dispositif selon la revendication 1, caractérisé en ce qu'au moins l'une (12a) des extrémités de ladite tige filetée (12) est solidaire de la plaque métallique constituant les moyens de guidage et de retenue du moteur électrique.

3. Dispositif selon la revendication 1 ou 2, caractérisé en ce que les bornes d'alimentation du moteur électrique sont constituées par des frotteurs (13; 109, 110) solidaires du stator (5) de celui-ci et coopérant avec l'organe (14) de commande de la position dudit renvoi.

4. Dispositif selon la revendication 3, caractérisé en ce que l'organe de commande de la position dudit renvoi comprend un tiroir (15; 101) comportant des pistes conductrices (17; 103, 104, 105) destinées à coopérer avec les frotteurs (13; 109, 110) pour alimenter le moteur électrique (6; 108).

5. Dispositif selon la revendication 4, caractérisé en ce que le tiroir (15) comporte deux jeux de pistes conductrices (19, 20) connectés à la source d'alimentation du véhicule de manière à présenter des polarités inverses et séparés par un espace libre de coupure de l'alimentation du moteur électrique et donc de détermination de la position de celui-ci.

6. Dispositif selon la revendication 5, caractérisé en ce que le tiroir (15) est monté déplaçable dans une glissière (16) solidaire du véhicule et comportant une fente (16a) à travers laquelle fait saillie un curseur (3) solidaire du tiroir (15), et déplaçable manuellement pour régler la position de l'espace libre de coupure de l'alimentation du moteur et de détermination de sa position et donc de celle du renvoi de sangle.

7. Dispositif selon la revendication 1 ou 2, caractérisé en ce que les bornes d'alimentation du moteur électrique sont constituées par des frotteurs solidaires du stator du moteur électrique, ces frotteurs coopérant avec des pistes conductrices fixes et reliées à la source d'alimentation du véhicule par l'intermédiaire de l'organe de commande de la position dudit renvoi.

8. Dispositif selon la revendication 7, caractérisé en ce que l'organe de commande de la position dudit renvoi est constitué par un inverseur à trois positions permettant de connecter lesdites pistes conductrices à la source d'alimentation du véhicule de manière que le moteur électrique et donc le renvoi de sangle qui en est solidaire, se déplacent soit dans un sens, soit dans l'autre, vers la position désirée et de couper cette alimentation lorsque cette position est atteinte.

9. Dispositif selon la revendication 4, caractérisé en ce que le tiroir (101) comporte un premier jeu (102) de trois pistes conductrices (103, 104, 105) à peu près alignées, séparées l'une de l'autre par un espace libre de coupure de l'alimentation du moteur électrique (108) et donc de détermination de la position de celui-ci, et connectées à la source d'alimentation du véhicule de manière à présenter des polarités alternées successivement.

10. Dispositif selon la revendication 9, caractérisé en ce que le tiroir (101) est monté déplaçable dans une glissière (112) d'une structure de support solidaire du véhicule et comportant une fente (113) à travers laquelle fait saillie une partie du tiroir (101), dont est solidaire un curseur (111), ledit curseur et le tiroir étant montés déplaçables manuellement le long de la course de réglage du renvoi de sangle pour régler la position des espaces libres de coupure de l'alimentation du moteur et de détermination de sa position et donc de celle du renvoi de sangle.

11. Dispositif selon la revendication 9 ou 10, caractérisé en ce que ledit premier jeu (102) de pistes conductrices est relié à la source d'alimentation du véhicule par l'intermédiaire de frotteurs (107) coopérant avec un second jeu (106) de pistes conductrices reliées à la source d'alimentation du véhicule.

## Claims

1. A device for adjusting the position of a strap return element (1), more particularly a safety belt for a motor vehicle, wherein the strap return element is mounted to be moved between two end positions by driving means comprising an electric motor (6; 108) supplied with current via an element (14) controlling the position of the strap return element at any point of the travel thereof defined by the two end positions, the strap return element (1) being disposed on an anchoring pin (4), characterized in that the anchoring pin is connected to the electric motor, which is mounted to be displaced axially between the two end positions, the pin (4) being connected to the stator (5) of the electric motor (6), the stator comprising projecting portions (7) cooperating with means (8) for guiding the movement of the motor and retaining the motor, the guiding and retaining means for the motor being formed by a metal plate having bent edge portions (9, 10) cooperating with the projecting portions (7) of the motor, and the rotor (11) of the electric motor is hollow and internally screwthreaded and cooperates with a screwthreaded rod (12) fixed to the vehicle to ensure the axial displacement of the stator (5) of the electric motor and therefore of the strap return element (1).

2. A device according to claim 1, characterized in that at least one (12a) of the ends of the screwthreaded rod (12) is connected to the metal plate forming the electric motor guiding and retaining means.

3. A device according to claims 1 or 2, characterized in that the supply terminals of the electric motor are formed by brushes (13; 109, 110) connected to the stator (5) of the motor and cooperating with the element (14) controlling the position of the strap return element.

4. A device according to claim 3, characterized in that the control element of the strap return element comprises a slide (15; 101) comprising conductive tracks (17; 103, 104, 105) adapted to cooperate with the brushes (13; 109, 110) for supplying current to the electric motor (6; 108).

5. A device according to claim 4, characterized in that the slide (15) comprises two sets of conductive tracks (19, 20) so connected to the current source of the vehicle as to have opposite polarities and separated by a gap for cutting off the supply of current to the electric motor and therefore determining the position thereof.

6. A device according to claim 5, characterized in that the slide (15) is movably mounted in a slideway (16) connected to the vehicle and comprising a slot (16a) through which a slider (3) mounted on the slide (15) projects and which can be moved manually to adjust the position of the gap cutting off the supply of current to the motor and determining its position and therefore the position of the strap return element.

7. A device according to claims 1 or 2, characterized in that the supply terminals of the electric motor are formed by brushes connected to the stator of the electric motor, said brushes cooperating with fixed conductive tracks which are connected to the current source of the vehicle via the element for controlling the position of the strap return element.

8. A device according to claim 7, characterized in that the element for controlling the position of the strap return element is formed by an inverting switch having three positions enabling the conductive tracks to be connected to the current source of the vehicle, so that the electric motor and therefore the strap return element connected thereto are moved in either one direction or the other, to the required position, the supply of current being cut off when such a position is reached.

9. A device according to claim 4, characterized in that the slide (101) comprises a first set (102) of three conductive tracks (103, 104, 105) which are substantially in alignment and separated from one another by a gap for cutting off the supply of current to the electric motor (108) and therefore determine its position, and which are connected to the current source of the vehicle so as to have successively alternating polarities.

10. A device according to claim 9, characterized in that the slide (101) is mounted to move in a slideway (112) of a supporting structure connected to the vehicle and comprising a slot (113) through which a part of the slide (101) on which a slider (111) is mounted projects, said slider and the slide being mounted to be moved manually along the adjustment travel of the strap return element, so as to adjust the position of the gaps for cutting off the supply of current from the motor and determining its position and therefore the position of the strap return element.

11. A device according to claims 9 or 10, characterized in that the first set (102) of conductive tracks is connected to the current source of the vehicle via brushes (107) cooperating with the second set (106) of conductive tracks connected to the current source of the vehicle.

## Patentansprüche

1. Vorrichtung zur Einstellung der Position eines Gurtumlenkbeschlags (1) insbesondere für einen Fahrzeugsicherheitsgurt, in der der Gurtumlenkbeschlag, der verschiebbar zwischen zwei Endpositionen mittels Mitnahmemitteln angeordnet ist, die einen Elektromotor (6; 108) aufweisen, der über ein Betätigungsorgan (14) der Position des Gurtumlenkbeschlags auf jedem Punkt seiner Bahn gespeist bzw. versorgt wird, die durch die beiden Endpositionen definiert ist, wobei der Gurtumlenkbeschlag (1) auf einem Ankerfinger (4) angeordnet ist, dadurch gekennzeichnet, daß der Ankerfinger einstückig mit dem Elektromotor ausgebildet bzw. mit diesem verbunden ist, wobei der Elektromotor axial verschiebbar zwischen den beiden Endpositionen angeordnet ist, wobei der Finger (4) mit dem Stator (5) des Elektromotors (6) verbunden ist, wobei der Stator Vorsprungbereiche (7) aufweist, die mit Führungsmitteln des Verschiebens und Haltens des Motors (8) zusammenwirken, die einstückig mit der Karosserie des Fahrzeugs ausgebildet sind, daß die Mittel zur Führung der Verschiebung und Halterung des Motors aus einer metallischen Platte gebildet sind, die umgefaltete Ränder (9, 10) aufweist, die mit den Vorsprungbereichen (7) des Motors zusammenwirken, und daß der Rotor (11) des Elektromotors hohl und mit Gewinde versehen ist, und mit einer Schraubenspindel (12) zusammenwirkt, die auf dem Fahrzeug befestigt ist, um die Axialverschiebung der Stators (5) des Elektromotors und somit des Gurtumlenkbeschlags (1) sicherzustellen.

2. Vorrichtung nach Anspruch 1, dadurch gekennzeichnet, daß wenigstens ein Ende (12a) der Enden der Schraubenspindel (12) mit der Metallplatte verbunden ist, welche Mittel zur Führung und Halterung des Elektromotors bilden.

3. Vorrichtung nach Anspruch 1 oder 2, dadurch gekennzeichnet, daß die Anschlußklemmen des Elektromotors durch Schleiffedern (13; 109, 110) gebildet sind, die einstückig mit den Stator (5) von diesem ausgebildet sind und mit dem Betätigungsorgan (14) der Position des Gurtumlenkbeschlags zusammenwirken.

4. Vorrichtung nach Anspruch 3, dadurch gekennzeichnet, daß das Betätigungsorgan der Position des Gurtumlenkbeschlags einen Schieber (15, 101) aufweist, welcher leitende Bahnen (17; 103, 104, 105) aufweist, die dazu bestimmt sind, mit den Schleiffedern (13; 109, 110) zusammenzuwirken, um den Elektromotor (6; 108) zu speisen.

5. Vorrichtung nach Anspruch 4, dadurch gekennzeichnet, daß der Schieber (15) zwei Leiterbahnengarnituren (19, 20) aufweist, die mit der Stromquelle des Fahrzeugs derart verbunden sind, daß sie gegensätzliche Polaritäten aufweisen, die durch einen Freiraum für die Unterbrechung der Speisung des Elektromotors und demzufolge der Bestimmung seiner Position getrennt sind.

6. Vorrichtung nach Anspruch 5, dadurch gekennzeichnet, daß der Schieber (15) verschiebbar in einer Gleitschiene (16) angeordnet ist, die mit dem Fahrzeug verbunden ist, und einen Spalt (16a) aufweist, durch den ein mit dem Schieber (15) verbundener Schiebekontakt (3) hervorspringt, der von Hand verschiebbar ist, um die Position des Trennfreiraums der Zufuhr des Motors und der Bestimmung seiner Position und demzufolge jener des Grundumlenkbeschlags einzustellen.

Vorrichtung nach Anspruch 1 oder 2, dadurch gekennzeichnet, daß die Anschlußklemmen des Elektromotors aus Schleiffedern gebildet sind, die mit den Stator des Elektromotors verbunden sind, wobei die Schleiffedern mit leitenden Bahnen zusammenwirken, die fest sind und mit der Stromquelle des Fahrzeugs mittels des Betätigungsorgans der Position des Gurtumlenkbeschlags verbunden sind.

8. Vorrichtung nach Anspruch 7, dadurch gekennzeichnet, daß das Betätigungsorgan der Position des Gurtumlenkbeschlags aus Umschalter mit drei Positionen gebildet ist, der erlaubt die leitenden Bahnen mit der Stromquelle des Fahrzeugs derart zu verbinden, daß der Elektromotor und somit der Gurtumlenkbeschlag, der mit diesem verbunden ist, sich entweder in die eine oder in die andere Richtung auf die gewünschte Position bewegen und erlaubt, diese Zufuhr zu unterbrechen, wenn diese Position erreicht ist.

9. Vorrichtung nach Anspruch 4, dadurch gekennzeichnet, daß der Schieber (101) eine erste Garnitur (102) mit drei Leiterbahnen (103, 104, 105) aufweist, die ungefähr zueinander ausgerichtet sind, wobei die eine von der anderen durch einen Freiraum für die Unterbrechung der Zufuhr des Elektromotors (108) und somit der Bestimmung seiner Position getrennt sind, und mit der Stromquelle des Fahrzeugs derart verbunden sind, daß sie aufeinanderfolgend alternierende Polaritäten aufweisen.

10. Vorrichtung nach Anspruch 9, dadurch gekennzeichnet, daß der Schieber (101) in einer Gleitschiene (112) eines Supportaufbaus verschiebbar angeordnet ist, der mit dem Fahrzeug verbunden ist, und einen Spalt (113) aufweist, durch den ein Abschnitt des Schiebers (101) vorspringt, mit dem ein Schiebekontakt (111) verbunden ist, wobei der Schiebekontakt und der Schieber von Hand verschiebbar entlang des Regelungsweges des Gurtumlenkbeschlages angeordnet sind, um die Position der freien Räume für die Trennung von der Zufuhr des Motors und der Bestimmung seiner Position und demzufolge jener des Gurtumlenkbeschlages einzustellen.

11. Vorrichtung nach Anspruch 9 oder 10, dadurch gekennzeichnet, daß die erste Garnitur (102) der leitenden Bahnen mit der Stromquelle des Fahrzeugs mittels Schleiffedern (107) verbunden ist, die mit einer zweiten Garnitur (106) von leitenden Bahnen zusammenwirken, die mit der Stromquelle des Fahrzeugs verbunden sind.

FIG.1

FIG.3

FIG.2

EP 0 223 672 B1

FIG.4

FIG.5